# EUROPEAN PATENT SPECIFICATION

(11) **EP 2 634 986 B1**
(45) Date of publication and mention of the grant of the patent: **30.03.2016**
(21) Application number: 13170170.8
(22) Date of filing: 05.09.2008
(51) Int. Cl.: H04L 27/26, H04L 5/00, H04L 1/00

(54) **METHOD AND SYSTEM FOR TRANSMITTING AND RECEIVING SIGNALS**
VERFAHREN UND SYSTEM ZUM ÜBERTRAGEN UND EMPFANGEN VON SIGNALEN
PROCÉDÉ ET SYSTÈME DE TRANSMISSION ET DE RÉCEPTION DE SIGNAUX

(30) Priority: 06.09.2007 US 970523 P
(43) Date of publication of application: 04.09.2013
(62) Divisional of application: 12197487.7
(73) Proprietor: LG Electronics, Inc., Seoul, 150-721 (KR)
(72) Inventor: Ko, Woo Suk, 137-724 Seoul (KR); Moon, Sang Chul, 137-724 Seoul (KR)
(74) Representative: Cabinet Plasseraud

(56) References cited:
- EP-A1- 2 302 852
- López Arranz C. A.et al: "Design of a simulation platform to test next generation of terrestrial DVB", UPCommons - Universitat Politècnica de Catalunya , 19 July 2007 (2007-07-19), pages Frontpg.-122, XP002694807, Retrieved from the Internet: URL:http://upcommons.upc.edu/pfc/bitstream /2099.1/4218/1/memoria.pdf [retrieved on 2013-02-25]
- BURGER R A ET AL: "A Survey of digital TV standards China", COMMUNICATIONS AND NETWORKING IN CHINA, 2007. CHINACOM '07. SECOND INTERNATIONAL CONFERENCE ON, IEEE, PISCATAWAY, NJ, USA, 22 August 2007 (2007-08-22), pages 687-696, XP031237966, ISBN: 978-1-4244-1008-8

## Description

### Technical Field

The present invention relates to a method of efficiently transmitting and receiving signals and efficient transmitter and receiver for an OFDM (Orthogonal Frequency Division Multiplexing) system including a TFS (Time-Frequency Slicing).

### Background Art

TFS (Time Frequency Slicing) technique has been introduced for broadcasting. When a TFS is used, a single service can be transmitted through multiple RF (Radio Frequency) channels on a two-dimensional time-frequency space.

OFDM (Orthogonal Frequency Division Multiplexing) is a frequency-division multiplexing (FDM) scheme utilized as a digital multi-carrier modulation method. A large number of closely-spaced orthogonal sub-carriers are used to carry data. The data are divided into several parallel data streams or channels, one for each sub-carrier. Each sub-carrier is modulated with a conventional modulation scheme (such as quadrature amplitude modulation or phase shift keying) at a low symbol rate, maintaining total data rates similar to conventional single-carrier modulation schemes in the same bandwidth.

OFDM has developed into a popular scheme for wideband digital communication, whether wireless or over copper wires, used in applications such as digital television and audio broadcasting, wireless networking and broadband internet access.

When TFS, which uses multiple RF bands for each transmitter is combined with OFDM, frequency diversity gain and statistical multiplexing gain can be obtained, thus, resources can be efficiently utilized. .

The document LOPEZ ARRANZ C A et al: Design of a simulation platform to test next generation of terrestrial DVB, UPCommons-Universitat Politecnica de Catulunya, 19 July 2007 (2007-07-19), pages 1 to 122 discloses a DVB-T2 transmitter and receiver. At the transmitter MPEG-2 transport streams are coded by an outer coder and inner coder, bit and symbol interleaved, QAM mapped, adapted to frames, MIMO processed and OFDM modulated.

### Disclosure of Invention

### Technical Problem

It is, therefore, an object of the present invention to provide a method of efficiently transmitting and receiving signals and efficient transmitter and receiver for an OFDM system including TFS.

The invention is defined in the independent claims. Particular embodiments are set-out in the dependent claims.

It is to be understood that both the foregoing general description and the following detailed description of the present invention are exemplary and explanatory and are intended to provide further explanation of the invention as claimed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### Advantageous Effects

According to the present invention, it is possible to provide a method of efficiently transmitting and receiving signals and efficient transmitter and receiver for an OFDM system including TFS.

### Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings:
Fig. 1 is a block diagram of an example of a TFS (Time Frequency Slicing)-OFDM (Orthogonal Frequency Division Multiplexing) transmitter.
Fig. 2 is a block diagram of an example of the input processor shown in the Fig. 1.
Fig. 3 is a block diagram of an example of the BICM (Bit-Interleaved Coding and Modulation) shown in Fig. 1.
Fig. 4 is a block diagram of an example of the Frame Builder shown in Fig. 1.
Fig. 5 is a table of an example of a hybrid modulation ratio when an LDPC block length is 64800 bits.
Fig. 6 is a table of an example of a hybrid modulation ratio when an LDPC block length is 16200 bits.
Fig. 7 is a block diagram of an example of the QAM mapper shown in Fig. 1.
Fig. 8 is a block diagram of an example of the QAM mapper combined with an inner encoder and an inner interleaver.
Fig. 9 is an example of a bit interleaver.
Fig. 10 is a table of an example of the bit interleaver when an LDPC block length is 64800 bits.
Fig. 11 is a table of an example of the bit interleaver when an LDPC block length is 16200 bits.
Fig. 12 is an example of the demux shown in Fig. 1.
Fig. 13 is another example of the demux shown in Fig. 1.
Fig. 14 is a relationship between an input bitstream of the bit interleaver and an output bitstream of the demux.
Fig. 15 is an example of a QAM symbol mapping.
Fig. 16 is a block diagram of an example of the MIMO/MISO decoder shown in Fig. 1.
Fig. 17 is a block diagram of an example of the modulator, specifically an example of an OFDM modulator.
Fig. 18 is a block diagram of an example of the analog processor shown in Fig. 1.
Fig. 19 is a block diagram of an example of a TFS-OFDM receiver.
Fig. 20 is a block diagram of an example of the AFE (Analog Front End) shown in Fig. 19.
Fig. 21 is a block diagram of an example of the demodulator, specifically an OFDM demodulator.
Fig. 22 is a block diagram of an example of the MIMO/MISO decoder shown in Fig. 19.
Fig. 23 is a block diagram of an example of the frame parser shown in Fig. 19.
Fig. 24 is a block diagram of an example of the QAM demapper shown in Fig. 23.
Fig. 25 is a block diagram of an example of the QAM demapper combined with an inner deinterleaver.
Fig. 26 is a block diagram of an example of the BICM decoder shown in Fig. 19.
Fig. 27 is a block diagram of an example of the output processor shown in Fig. 19.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

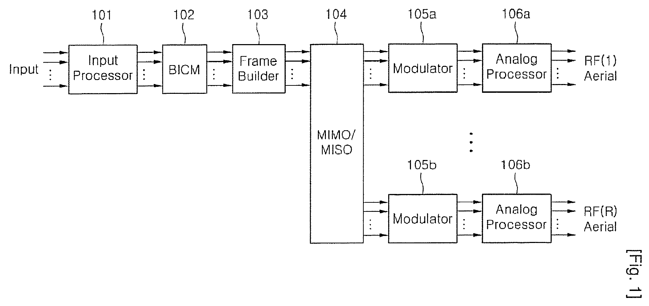

Fig. 1 shows an example of proposed TFS (Time Frequency Slicing)-OFDM (Orthogonal Frequency Division Multiplexing) transmitter. A multiple MPEG2-TS (Transport Stream) and a multiple Generic stream can be inputted into a TFS transmitter. The input processor (101) can split the inputted streams into a multiple output signals for a multiple PLP (Physical Layer Path). The BICM (Bit-Interleaved Coding and Modulation) (102) can encode and interleave the PLP individually. The frame builder (103) can transform the PLP into total R of RF bands. MIMO (Multiple-Input Multiple-Output)/MISO (Multiple-Input Single-Output) (104) technique can be applied for each RF band. Each RF band for each antenna can be individually modulated by the modulator (105a, b) and can be transmitted to antennas after being converted to an analog signal by the analog processor (106a, b).

### Mode for the Invention

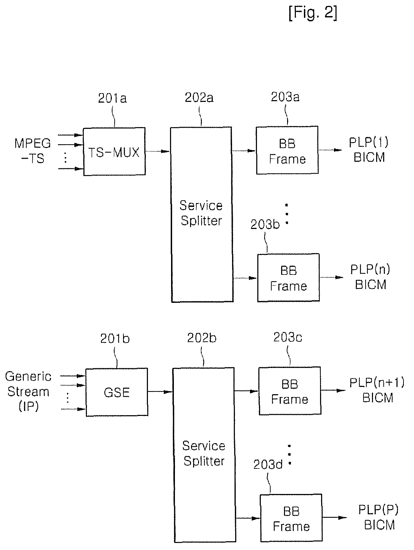

Fig. 2 is an example of the input processor. MPEG-TS (Transport Stream) can be multiplexed into a single output through TS-MUX (201a) and Generic streams (Internet protocol) can be transformed into a single output through GSE (General Stream Encapsulation) (201b). Each output from the TS-MUX and GSE can be split for multiple services by the service splitter (202a, b). PLP is a processing of each service. Each PLP can be transformed into a frame by the BB (Baseband) Frame (103a~d).

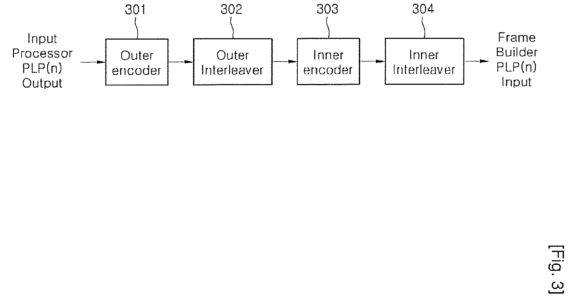

Fig. 3 is an example of the BICM. The Outer encoder (301) and the inner encoder (303) can add redundancy for error correction in a transmission channel. The outer interleaver (302) and the inner interleaver (304) can interleave data randomly to mitigate burst errors.

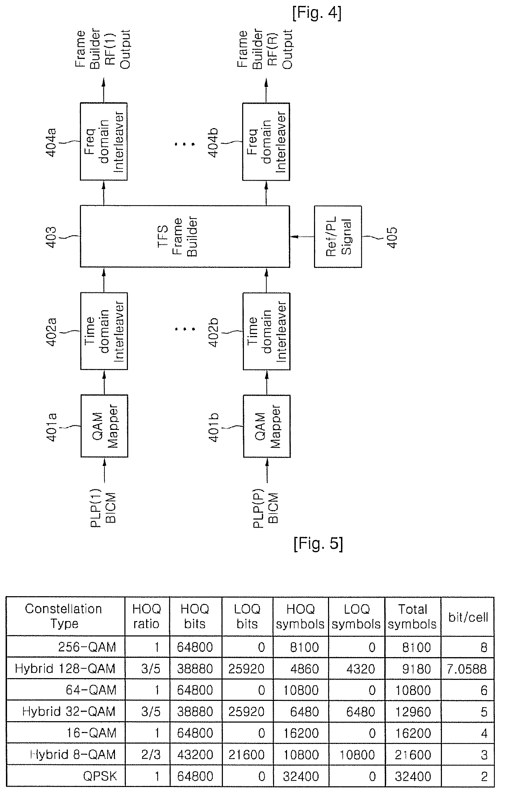

Fig. 4 is an example of the frame builder. QAM mapper (401a, b) can transform inputted bits into QAM symbols. Hybrid QAM can be used. Time domain interleaver (402a, b) can interleave data in time domain to make the data be robust against burst error. At this point, an effect of interleaving many RF bands can be obtained in a physical channel because the data are going to be transmitted to a multiple RF bands. TFS frame builder (403) can split inputted data to form TFS frames and send the TFS frames to total R of RF bands according to a TFS scheduling. Each RF band can be individually interleaved in frequency domain by frequency domain interleaver (404a, b) and can become robust against frequency selective fading. Ref (Reference Signals), PL (Physical Layer) signaling, and pilots can be inserted when the TFS frame is built (405).

By hybriding two Even-QAMs, which transmits even number of bits per QAM symbol, an Odd-QAM, which transmits odd number of bits per QAM symbol can be formed by a Hybrid QAM mapper. For example, hybrid 128-QAM can be obtained by hybriding 256-QAM and 64-QAM, hybrid 32-QAM can be obtained by hybriding 64-QAM and 16-QAM, and hybrid 8-QAM can be obtained by hybriding 16-QAM and 4-QAM.

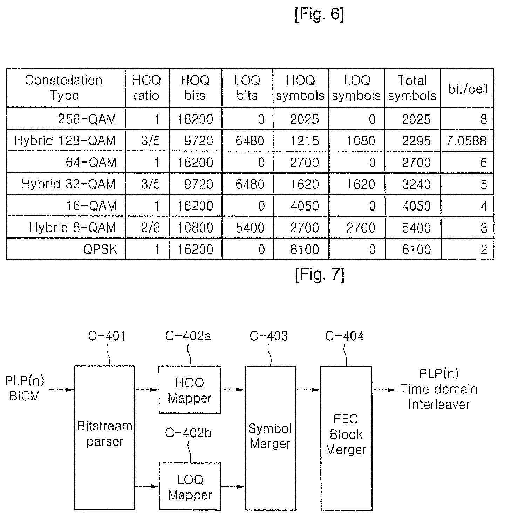

Fig. 5 and Fig. 6 show examples of a hybrid ratio when DVB-S2 LDPC (Low Density Parity Check) code is used as an inner code. The first column on the table represents constellation type. HOQ (Higher-Order QAM) ratio represents a ratio for higher-order QAM between two QAM types. LOQ (Lower-Order QAM) ratio is 1-HOQ ratio. Hybrid QAM can be obtained by two adjacent Even-QAMs. For example, hybrid 128-QAM (bit/cell=7) is obtained by hybriding 256-QAM and 64-QAM. HOQ bits and LOQ bits represent number of bits used for mapping into HOQ symbol and LOQ symbol respectively in one LDPC block. HOQ symbols and LOQ symbols represent number of symbols after symbol mapping. Total symbol is a sum of the HOQ symbols and the LOQ symbols. The last column on the table represents effective number of bits transmitted per QAM symbol. As seen on the table, only Hybrid 128-QAM shows a slight difference from 7 bit/cell.

Fig. 6 shows a case when LDPC block length is 16200 bits. When a scheduling is performed to evenly distribute QAM symbols, which are generated by the Frame Builder, to RF bands of TFS system, the value of the total symbols should be divisible by a least common multiple of each index number of RF band. For example, if six RF bands are allowed, then the value of total symbols on the table should be divisible by a least common multiple of 1 through 6, i.e., 60. For the case shown in Fig. 5, it is divisible. However, for the case shown in Fig. 6, it is not divisible. If LDPC block length is 16200 bits as shown in Fig. 6, the total symbols on the table can be made divisible by 60 by combining four of the LDPC blocks into a single LDPC block having a length of 64800 as in Fig. 5.

Fig. 7 shows an example of QAM mapper using hybrid modulation. Bit stream parser(c-401) can parse inputted bitstreams into HOQ mapper(c-402a) and LOQ mapper(c-402b). The symbol merger(c-403) can merge the two inputted symbol streams into a single symbol stream. FEC (Forward Error Correction) block merger (c-404), for example, can combine four of bit symbol blocks having a length of 16200 into a single block having a length of 64800.

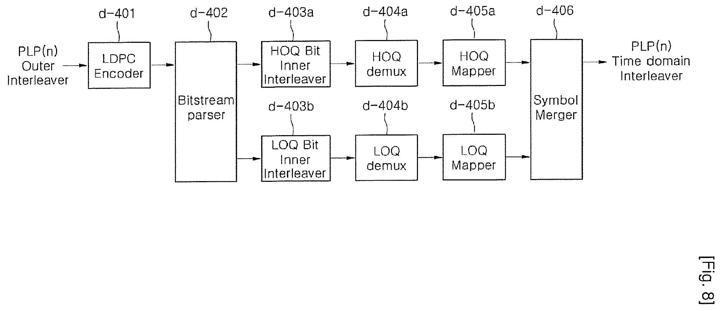

Fig. 8 shows an example of QAM mapper combined with inner interleavers. Bitstreams can be divided by bitstream parser (d-402) into bitstreams for HOQ and LOQ mappers. Each bitstream goes through bit interleaving (d-403a, d-403b) and demux (d-404a, d-406) processes. Throughout these processes, characteristics of LDPC codeword and constellation reliability can be combined. Each output can be converted into symbolstreams by the HOQ and LOQ mappers (d-405a, d-405b), then merged into a single symbolstream by the symbol merger (d-406).

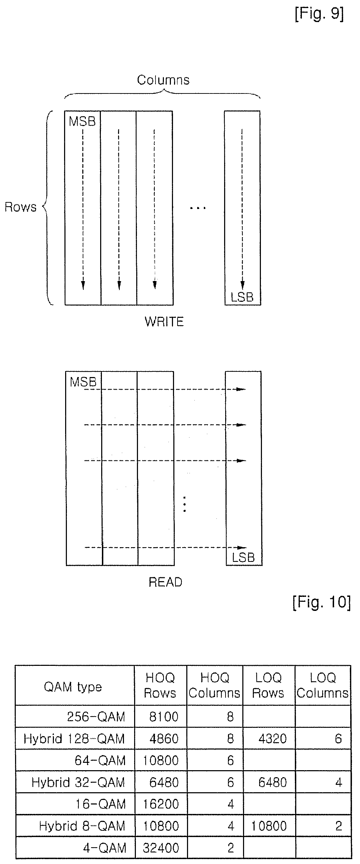

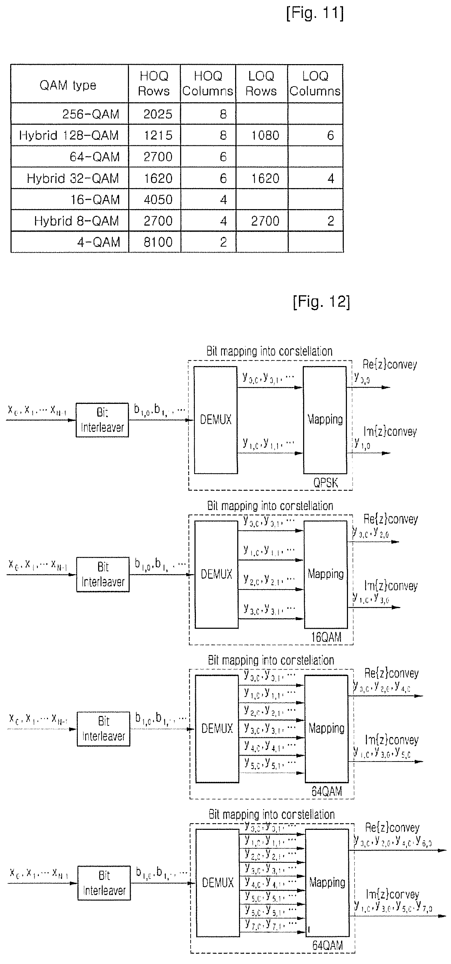

Fig. 9 shows an example of bit interleaving. Bits can be saved into a matrix type memory having columns and rows in the direction of column or in the direction of the blue arrow. Then the saved bits can be read out in the direction of row or in the direction of the red arrow. Figs. 10 and 11 show numbers of columns and rows of HOQ bit interleaver (d-403a) and LOQ bit interleaver (d-403b) according to QAM modulation type. As seen in the tables, when a typical even-QAM is used but a hybrid modulation is not used, only HOQ interleaving is used.

Fig. 12 shows an example of the demux. It shows that interleaved outputs according to QPSK, 16-QAM, 64-QAM, and 256-QAM can be demultiplexed and mapped. It also shows that the numbers of output bitstreams from demuxs are 2, 4, 6, and 8 respectively.

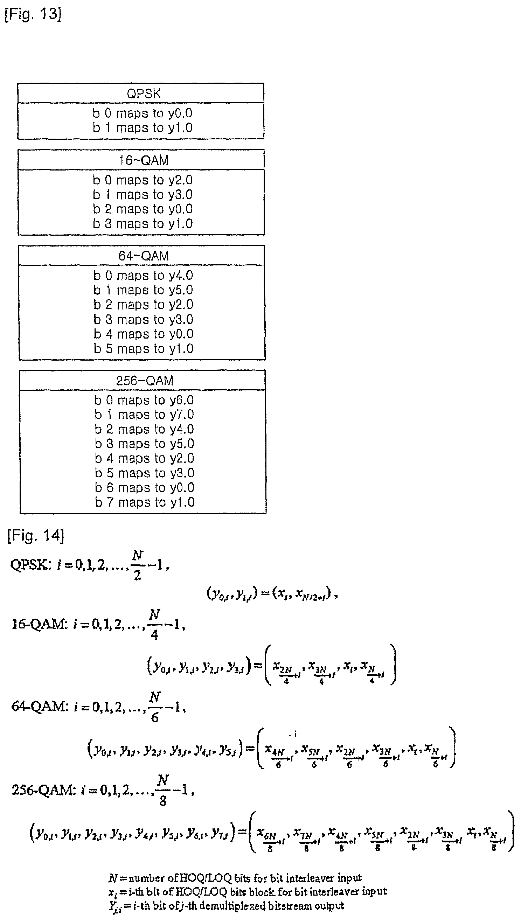

Detail of the demux operation is shown in Fig. 13. As seen in the figure, output order of interleaver can be changed by demux. For example, for the case of 16-QAM, bitstreams can be outputted as j-th output bitstream of each demux according to a value resulting from performing an modulo-4 operation on index of input bitstream b. Fig. 13 shows a relationship between a value resulting from a modulo operation and demux output branch index j.

Fig. 14 shows a relationship between an input bitstream of bit interleaver and an output bitstream of demux. As seen in the equations, dividing index of input bitstream by 2, 4, 6, and 8 is a result by the interleaving and mapping each index to index of output bitstream is a result by the demux.

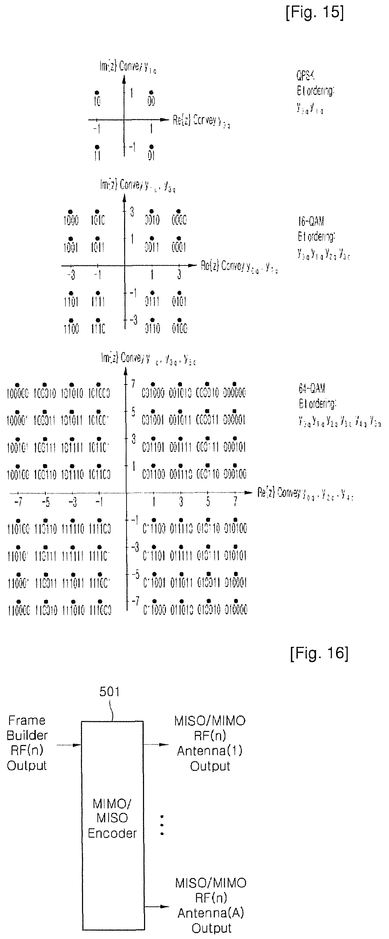

Fig. 15 shows an example of QAM symbol mapping. Output bitstream of demux can be converted into symbolstream by using Gray mapping rule. Even if it is not shown, it can be extended to constellation of 256-QAM or more.

Fig. 16 shows an example of MIMO/MISO Encoder. MIMO/MISO Encoder (501) applies MIMO/MISO method to obtain an additional diversity gain or payload gain. MIMO/MISO Encoder can output signals for total A of antennas. MIMO encoding can be performed individually on total A of antenna signals for each RF band among total R of RF bands. A is equal to or greater than 1.

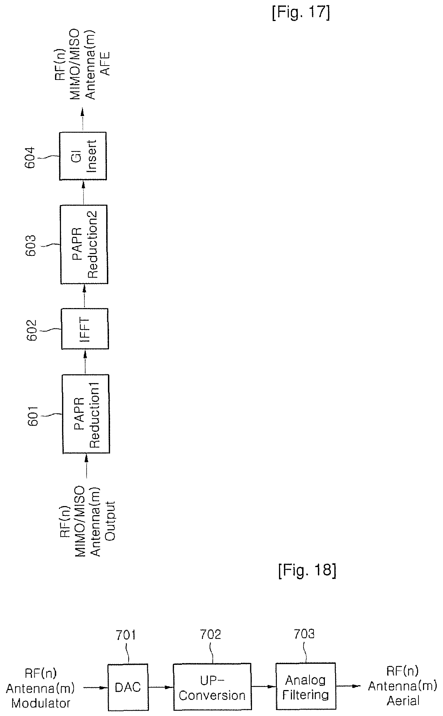

Fig. 17 shows an example of a modulator, specifically an example of an OFDM modulator. PAPR (Peak-to-Average Power Ratio) reduction 1 (601) can be performed on Antenna (m) signals of RF (n) bands. IFFT (602) can be performed for OFDM demodulation. PAPR reduction 2 (603) can be performed after the IFFT. ACE (Active Constellation Extension) and a tone reservation can be used for the PAPR reduction 2 (603). Lastly, guard interval (604) can be inserted.

Fig. 18 shows an example of the analog processor. Output of each modulator can be converted to an analog-domain signal by a DAC (Digital to Analog Conversion) (701), then can be transmitted to antenna after up-conversion (702). Analog filtering (703) can be performed.

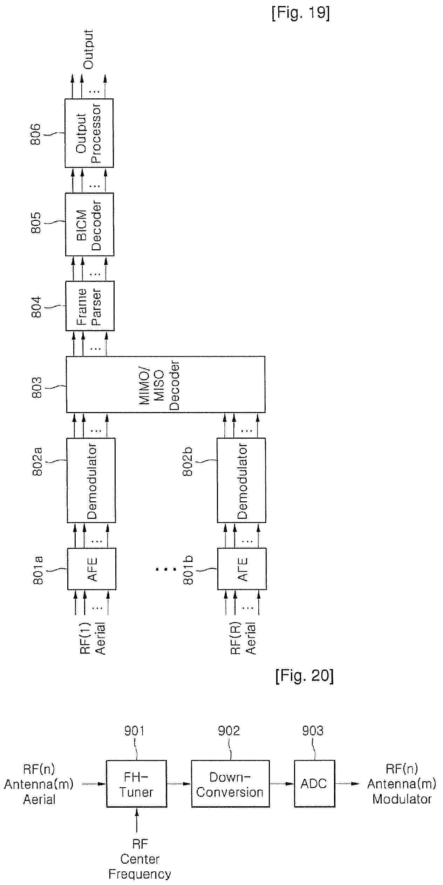

Fig. 19 shows an example of a TFS-OFDM receiver. When total R of RF bands are used for TFS system, received signals by AFE (Analog Front End) (801a,b) can be demodulated by demodulators (802a,b), then can be decoded by MIMO/MISO Decoder (803) to obtain diversity gain. Frame parser (804) can restore multiple PLP signals from received TFS frame. BICM decoder (805) can correct errors in a transmission channel. Finally, output processor (806) can restore signals according to necessary format.

Fig. 20 shows an example of an AFE (Analog Front End). FH (Frequency Hopping)-tuner (901) can perform a frequency hopping and tune signals according to inputted RF center frequency. After down-conversion (902), signals can be converted to digital signals by ADC (Analog to Digital Conversion) (903).

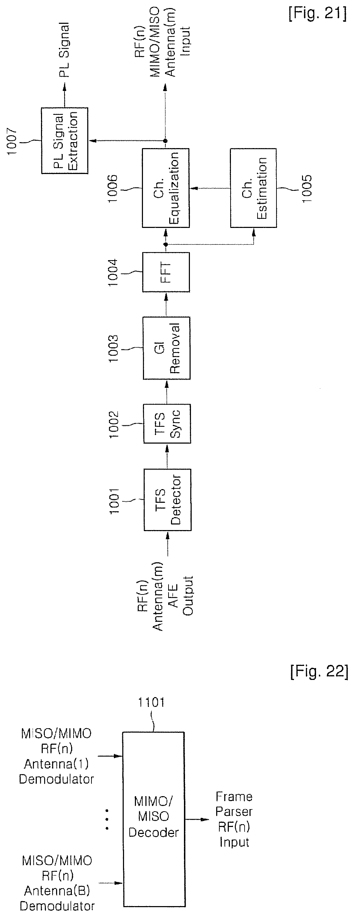

Fig. 21 shows an example of a demodulator, specifically an OFDM demodulator. TFS detector (1001) can detect TFS signals in a received digital signal. TFS sync (1002) can synchronize in time and frequency domains. After GI (Guard Interval) (1003) is removed, symbols in frequency domain can be obtained by performing FFT (1004) for OFDM demodulation. Channel Estimation (1005) can estimate distortion in a transmission channel based on pilot signals. Based on the estimated distortion, Channel Equalization (1006) can compensate distortion in the transmission channel. Finally, PL (Physical Layer) signaling information can be extracted from equalized data and can be transmitted to a system controller.

Fig. 22 shows an example of MIMIO/MISO decoder. Diversity and multiplexing gain can be obtained from data received from total B of antennas. For MIMO, B is greater than 1. For MISO, B is 1.

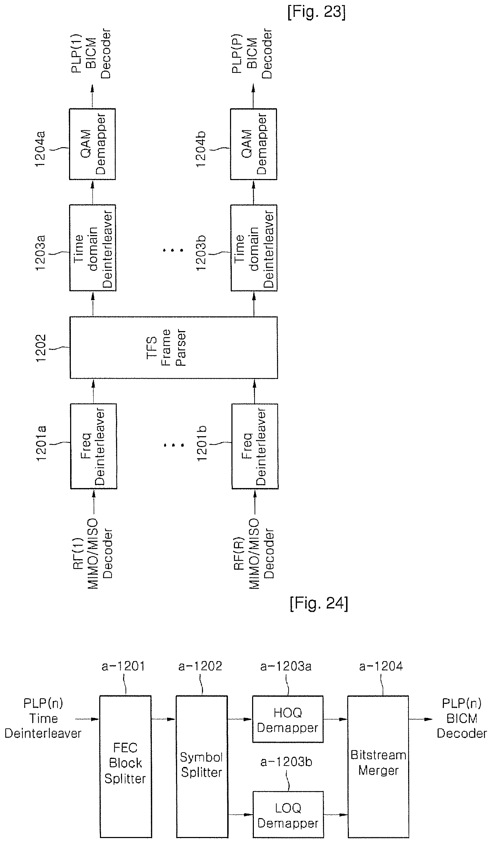

Fig. 23 shows an example of a Frame parser. Total R of the inputted RF bands data can undergo frequency deinterleaving (1201a, b), then can be reconstructed into datastream by TFS frame parser for each PLP (Physical Layer Path) according to a TFS scheduling. For each PLP, input data for BICM decoder can be obtained by using time domain deinterleaver (1203a, b) and QAM demapper (1204a, b). At this point, hybrid QAM demapper can be used as the QAM demapper.

Fig. 24 shows an example of performing a QAM demapper, which is a counterpart of Fig. 7 of transmitter. FEC block splitter can split inputted symbol block unit having 64800 bits into four symbol blocks of 16200 bits when short DVB-S2 LDPC mode is used. Symbol splitter (a-1202) can split inputted symbol streams into two symbol streams for HOQ and LOQ demapper. HOQ demapper (a-1203a) and LOQ demapper (a-1203b) can perform HOQ and LOQ demapping respectively. Bitstream merger (a-1204) can merge two inputted bit streams into a single output bitstream.

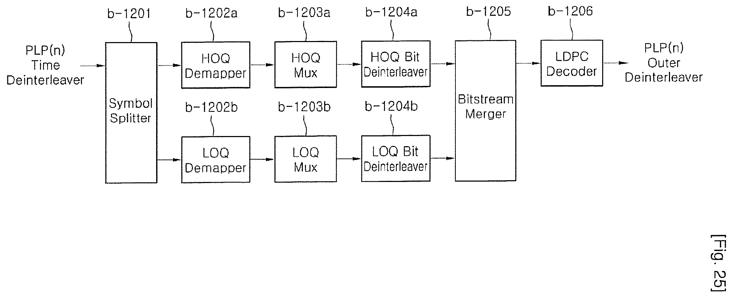

Fig. 25 shows an example of a QAM demapper combined with inner deinterleavers which are counterparts of Fig. 8 of transmitter. For each PLP, symbol splitter (b-1201) can split output of time domain deinterleaver into two symbol streams for HOQ and LOQ demappers. HOQ and LOQ Demapper (b- 1202a, b- 1202b) can convert symbolstreams into bitstreams. Each bitstream can be rearranged by multiplexer (b-1203a, b- 1203b), which is a counterpart of the demux of Fig. 8 of transmitter. Two bit deinterleavers (b-1204a, b-1206) can deinterleave bitstreams according to constellation type. Finally, bitstream merger (b-1205) can merge bitstreams into a single bitstream, then LDPC decoder (b-1206) can correct errors in a transmission channel.

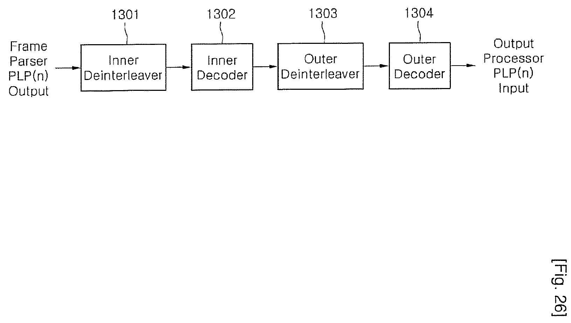

Fig. 26 shows an example of a BICM decoder. Inner deinterleaver (1301) and outer deinterleaver (1303) can convert burst errors in a transmission channel into random errors. Inner decoder (1302) and outer decoder (1304) can correct errors in the transmission channel.

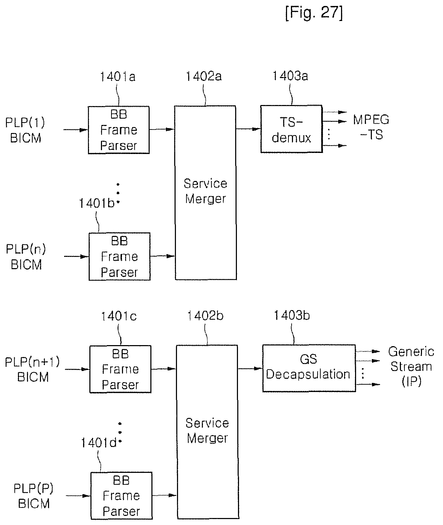

Fig. 27 shows an example of an output processor. BB (Baseband) frame parser (1401a d) can reconstruct input data into total P of PLP data. Service mergers (1402a, b) can merge data into a single TS (Transport Stream) and a single GSE stream. For TS, TS-demux (1403a) can reconstruct original TS. For GSE stream, GSE Decapsulation (1403b) can reconstruct generic stream.

It will be apparent to those skilled in the art that various modifications and variations can be made in the present invention. Thus, it is intended that the present invention covers the modifications and variations of this invention provided they come within the scope of the appended claims.

## Claims

1. A method of transmitting broadcast signals, the method comprising:
input processing input streams to output Baseband, BB, frames for multiple Physical Layer Paths, PLPs;
first coding data in each of the BB frames per each of the multiple PLPs;
second coding the first coded data by a Low Density Parity Check, LDPC, scheme;
bit interleaving the second coded data;
Quadrature Amplitude Modulation, QAM, mapping the bit interleaved data;
time interleaving the QAM mapped data;
building signal frames including the time interleaved data;
frequency interleaving data in the built signal frames; and
modulating data in the signal frame by an Orthogonal Frequency Division Multiplex, OFDM, scheme,
wherein data in the signal frames are processed by a Multi-Input Multi-Output, MIMO, scheme or a Multi-Input Single-Output, MISO, scheme.

2. The method of claim 1, wherein the method further includes:
dividing the second coded data into two bitstreams.

3. The method of claim 2, wherein the QAM mapping further comprising:
mapping data in the first bitstream to respective symbols using a High Order Quadrature Amplitude Modulation, HOQ, mapping method; and
mapping data in the second bitstream to respective symbols using a Low Order Quadrature Amplitude Modulation, LOQ, mapping method.

4. The method of claim 2, wherein the method further includes:
demultiplexing the second coded data according to the HOQ mapping method and the LOQ mapping method.

5. An apparatus of transmitting broadcast signals, the apparatus comprising:
an input processor (101) configured to input process input streams to output Baseband, BB, frames for multiple Physical Layer Paths, PLPs;
an outer coder (301) configured to first code in each of the BB frames per each of the multiple PLPs;
an inner coder (303) configured to second code the first coded data by a Low Density Parity Check, LDPC, scheme;
a bit interleaver (d403a, d403b) configured to bit interleave the second coded data;
a Quadrature Amplitude Modulation, QAM, mapper (401a,401b) configured to map the bit interleaved data;
a time interleaver (402a, 402b) configured to time interleave the QAM mapped data;
a frame builder (403) configured to build signal frames including the time interleaved data;
a frequency interleaver (404a, 404b) configured to frequency interleave data in the built signal frames; and
a modulator (105a, 105b) configured to modulate data in the signal frame by an Orthogonal Frequency Division Multiplex, OFDM, scheme,
wherein data in the signal frames are processed by a Multi-Input Multi-Output, MIMO, scheme or a Multi-Input Single-Output, MISO, scheme.

6. The apparatus of claim 5, wherein the apparatus further includes:
a divider (C-401) configured to divide the second coded data into two bitstreams.

7. The apparatus of claim 6, wherein the QAM mapper (401 a,401 b) further maps data in the first bitstream to respective symbols using a High Order Quadrature Amplitude Modulation, HOQ, mapping method and maps data in the second bitstream to respective symbols using a Low Order Quadrature Amplitude Modulation, LOQ, mapping method.

8. The apparatus of claim 6, wherein the apparatus further includes:
a demultiplexer (d-404a, d-404b) configured to demultiplex the second coded data according to the HOQ mapping method and the LOQ mapping method.

9. A method of receiving broadcast signals, the method comprising:
receiving the broadcast signals and demodulating the received broadcast signals by an Orthogonal Frequency Division Multiplex, OFDM, scheme;
frequency deinterleaving the demodulated broadcast signals;
parsing signal frames including the frequency deinterleaved data;
time deinterleaving data in the parsed signal frames; Quadrature Amplitude Modulation, QAM, demapping the time deinterleaved data;
bit deinterleaving the QAM demapped data;
first decoding the bit deinterleaved data per a single Physical Layer Path, PLP, by a Low Density Parity Check, LDPC, scheme;
second decoding the first decoded data; and
output processing the second decoded data, wherein data in the signal frames are processed by a Multi-Input Multi-Output, MIMO, scheme or a Multi-Input Single-Output, MISO, scheme.

10. The method of claim 9, wherein the QAM demapping further comprising:
demapping the time deinterleaved data using a High Order Quadrature Amplitude Modulation, HOQ, mapping method; and
demapping the time deinterleaved data using a Low Order Quadrature Amplitude Modulation, LOQ, mapping method.

11. An apparatus of receiving broadcast signals, the apparatus comprising:
an Orthogonal Frequency Division Multiplex, OFDM, demodulator (802a, 802b) configured to receive the broadcast signals and demodulate the received broadcast signals by an Orthogonal Frequency Division Multiplex, OFDM, scheme;
a frequency deinterleaver (1201 a, 1201b)configured to frequency deinterleave the demodulated broadcast signals;
a frame parser (1202)configured to parse signal frames including the frequency deinterleaved data;
a time deinterleaver (1203a, 1203b) configured to time deinterleave data in the parsed signal frames;
a Quadrature Amplitude Modulation, QAM, demapper (1204a, 1204b) configured to demap the time deinterleaved data;
a bit deinterleaver (b-1204a, b-1204b)configured to bit deinterleave the QAM demapped data;
an inner decoder (b-1206) configured to first decode the bit deinterleaved data per a single Physical Layer Path, PLP, by a Low Density Parity Check, LDPC, scheme;
an outer decoder (1304) configured to second decode the first decoded data; and
an output processor (806) configured to output process the second decoded data, wherein data in the signal frames are processed by a Multi-Input Multi-Output, MIMO, scheme or a Multi-Input Single-Output, MISO, scheme.

12. The apparatus of claim 11, wherein the QAM demapper (1204a, 1204b) further demaps the time deinterleaved data using a High Order Quadrature Amplitude Modulation, HOQ, mapping method and demaps the time deinterleaved data using a Low Order Quadrature Amplitude Modulation, LOQ, mapping method.

## Patentansprüche

1. Verfahren zum Senden von Rundfunksignalen, umfassend:
Eingabeverarbeiten von Eingabeströmen zum Ausgeben von Basisband-Rahmen, BB-Rahmen, für mehrere Physical Layer Paths, PLPs;
erstes Kodieren von Daten in jedem der BB-Rahmen pro jeden der mehreren PLPs;
zweites Kodieren der ersten kodierten Daten durch ein Low-Density-Parity-Check-Schema, LDPC-Schema;
Bitverschachteln der zweiten kodierten Daten;
Quadraturamplitudenmodulation-Abbilden, QAM-Abbilden, der bitverschachtelten Daten;
Zeitverschachteln der QAM-abgebildeten Daten;
Aufbauen von Signalrahmen, welche die zeitverschachtelten Daten beinhalten;
Frequenzverschachteln von Daten in den aufgebauten Signalrahmen und
Modulieren von Daten im Signalrahmen durch ein Orthogonal-Frequency-Division-Multiplex-Schema, OFDM-Schema,
wobei Daten in den Signalrahmen durch ein Multi-Input/Multi-Output-Schema, MIMO-Schema, oder ein Multi-Input/Single-Output-Schema, MISO-Schema, verarbeitet werden.

2. Verfahren nach Anspruch 1, wobei das Verfahren ferner Folgendes beinhaltet:
Teilen der zweiten kodierten Daten in zwei Bitströme.

3. Verfahren nach Anspruch 2, wobei das QAM-Abbilden ferner Folgendes umfasst:
Abbilden von Daten im ersten Bitstrom anhand eines High-Order-Quadraturamplitudenmodulation-Abbildungsverfahrens, HOQ-Abbildungsverfahrens, auf jeweilige Symbole und
Abbilden von Daten im zweiten Bitstrom anhand eines Low-Order-Quadraturamplitudenmodulation-Abbildungsverfahrens, LOQ-Abbildungsverfahrens, auf jeweilige Symbole.

4. Verfahren nach Anspruch 2, wobei das Verfahren ferner Folgendes beinhaltet:
Demultiplexen der zweiten kodierten Daten nach dem HOQ-Abbildungsverfahren und dem LOQ-Abbildungsverfahren.

5. Vorrichtung zum Senden von Rundfunksignalen, umfassend:
einen Eingabeprozessor (101) zum Eingabeverarbeiten von Eingabeströmen zum Ausgeben von Basisband-Rahmen, BB-Rahmen, für mehrere Physical Layer Paths, PLPs;
einen äußeren Kodierer (301) zum ersten Kodieren in jedem der BB-Rahmen pro jeden der mehreren PLPs;
einen inneren Kodierer (303) zum zweiten Kodieren der ersten kodierten Daten durch ein Low-Density-Parity-Check-Schema, LDPC-Schema;
einen Bitverschachtler (d403a, d403b) zum Bitverschachteln der zweiten kodierten Daten;
einen Quadraturamplitudenmodulation-Abbilder, QAM-Abbilder (401a, 401b), zum Abbilden der bitverschachtelten Daten;
einen Zeitverschachtler (402a, 402b) zum Zeitverschachteln der QAM-abgebildeten Daten;
eine Rahmenaufbaueinrichtung (403) zum Aufbauen von Signalrahmen, welche die zeitverschachtelten Daten beinhalten;
einen Frequenzverschachtler (404a, 404b) zum Frequenzverschachteln von Daten in den aufgebauten Signalrahmen und
einen Modulator (105a, 105b) zum Modulieren von Daten im Signalrahmen durch ein Orthogonal-Frequency-Division-Multiplex-Schema, OFDM-Schema,
wobei Daten in den Signalrahmen durch ein Multi-Input/Multi-Output-Schema, MIMO-Schema, oder ein Multi-Input/Single-Output-Schema, MISO-Schema, verarbeitet werden.

6. Vorrichtung nach Anspruch 5, wobei die Vorrichtung ferner Folgendes beinhaltet:
einen Teiler (C-401) zum Teilen der zweiten kodierten Daten in zwei Bitströme.

7. Vorrichtung nach Anspruch 6, wobei der QAM-Abbilder (401a,401b) ferner Daten im ersten Bitstrom anhand eines High-Order-Quadraturamplitudenmodulation-Abbildungsverfahrens, HOQ-Abbildungsverfahrens, auf jeweilige Symbole abbildet und Daten im zweiten Bitstrom anhand eines Low-Order-Quadraturamplitudenmodulation-Abbildungsverfahrens, LOQ-Abbildungsverfahrens, auf jeweilige Symbole abbildet.

8. Vorrichtung nach Anspruch 6, wobei die Vorrichtung ferner Folgendes beinhaltet:
einen Demultiplexer (d-404a, d-404b) zum Demultiplexen der zweiten kodierten Daten nach dem HOQ-Abbildungsverfahren und dem LOQ-Abbildungsverfahren.

9. Verfahren zum Empfangen von Rundfunksignalen, umfassend:
Empfangen der Rundfunksignale und Demodulieren der empfangenen Rundfunksignale durch ein Orthogonal-Frequency-Division-Multiplex-Schema, OFDM-Schema;
Frequenzentschachteln der demodulierten Rundfunksignale;
Parsen von Signalrahmen, welche die frequenzentschachtelten Daten beinhalten;
Zeitentschachteln von Daten in den geparsten Signalrahmen;
Quadraturamplitudenmodulation-Rückabbilden, QAM-Rückabbilden, der zeitentschachtelten Daten;
Bitentschachteln der QAM-rückabgebildeten Daten;
erstes Dekodieren der bitentschachtelten Daten pro einen einzelnen Physical Layer Path, PLP, durch ein Low-Density-Parity-Check-Schema, LDPC-Schema;
zweites Dekodieren der ersten dekodierten Daten und
Ausgabeverarbeiten der zweiten dekodierten Daten, wobei Daten in den Signalrahmen durch ein Multi-Input/Multi-Output-Schema, MIMO-Schema, oder ein Multi-Input/Single-Output-Schema, MISO-Schema, verarbeitet werden.

10. Verfahren nach Anspruch 9, wobei das QAM-Rückabbilden ferner Folgendes umfasst:
Rückabbilden der zeitentschachtelten Daten anhand eines High-Order-Quadraturamplitudenmodulation-Abbildungsverfahrens, HOQ-Abbildungsverfahrens, und
Rückabbilden der zeitentschachtelten Daten anhand eines Low-Order-Quadraturamplitudenmodulation-Abbildungsverfahrens, LOQ-Abbildungsverfahrens.

11. Vorrichtung zum Empfangen von Rundfunksignalen, umfassend:
einen Orthogonal-Frequency-Division-Multiplex-Demodulator, OFDM-Demodulator (802a, 802b), zum Empfangen von Rundfunksignalen und zum Demodulieren der empfangenen Rundfunksignale durch ein Orthogonal-Frequency-Division-Multiplex-Schema, OFDM-Schema;
einen Frequenzentschachtler (1201a, 1201b) zum Frequenzentschachteln der demodulierten Rundfunksignale;
einen Rahmenparser (1202) zum Parsen von Signalrahmen, welche die frequenzentschachtelten Daten beinhalten;
einen Zeitentschachtler (1203a, 1203b) zum Zeitentschachteln von Daten in den geparsten Signalrahmen;
einen Quadraturamplitudenmodulation-Rückabbilder, QAM-Rückabbilder (1204a, 1204b), zum Rückabbilden der zeitentschachtelten Daten;
einen Bitentschachtler (b-1204a, b-1204b) zum Bitentschachteln der QAMrückabgebildeten Daten;
einen inneren Dekodierer (b-1206) zum ersten Dekodieren der bitentschachtelten Daten pro einen einzelnen Physical Layer Path, PLP, durch ein Low-Density-Parity-Check-Schema, LDPC-Schema;
einen äußeren Dekodierer (1304) zum zweiten Dekodieren der ersten dekodierten Daten und
einen Ausgabeprozessor (806) zum Ausgabeverarbeiten der zweiten dekodierten Daten, wobei Daten in den Signalrahmen durch ein Multi-Input/Multi-Output-Schema, MIMO-Schema, oder ein Multi-Input/Single-Output-Schema, MISO-Schema, verarbeitet werden.

12. Vorrichtung nach Anspruch 11, wobei der QAM-Rückabbilder (1204a, 1204b) ferner die zeitentschachtelten Daten anhand eines High-Order-Quadraturamplitudenmodulation-Abbildungsverfahrens, HOQ-Abbildungsverfahrens, rückabbildet und die zeitentschachtelten Daten anhand eines Low-Order-Quadraturamplitudenmodulation-Abbildungsverfahrens, LOQ,-Abbildungsverfahrens, rückabbildet.

## Revendications

1. Procédé pour transmettre des signaux de radiodiffusion, le procédé comprenant :
l'entrée de flux d'entrée de processus pour délivrer en sortie des trames de bande de base, BB, pour de multiples chemins de couche physique, PLP ;
le premier codage de données dans chacune des trames BB pour chacun des multiples PLP ;
le deuxième codage des premières données codées par un schéma de contrôle de parité à faible densité, LDPC ;
l'entrelacement par bits des deuxièmes données codées ;
le mappage par modulation d'amplitude en quadrature, QAM, des données entrelacées par bits ;
l'entrelacement temporel des données mappées QAM ;
la construction de trames de signal comprenant les données entrelacées temporellement ;
l'entrelacement fréquentiel de données dans les trames de signal construites ; et
la modulation de données dans la trame de signal par un schéma de multiplexage par répartition en fréquence orthogonale, OFDM,
dans lequel des données dans les trames de signal sont traitées par un schéma à entrées multiples et sorties multiples, MIMO, ou un schéma à entrées multiples et sortie unique, MISO.

2. Procédé selon la revendication 1, dans lequel le procédé comprend en outre :
la division des deuxièmes données codées en deux trains binaires.

3. Procédé selon la revendication 2, dans lequel le mappage QAM comprend en outre :
le mappage de données dans le premier train binaire pour des symboles respectifs en utilisant un procédé de mappage par modulation d'amplitude en quadrature d'ordre supérieur, HOQ ; et
le mappage de données dans le deuxième train binaire pour des symboles respectifs en utilisant un procédé de mappage par modulation d'amplitude en quadrature d'ordre inférieur, LOQ.

4. Procédé selon la revendication 2, dans lequel le procédé comprend en outre :
le démultiplexage des deuxièmes données codées selon le procédé de mappage HOQ et le procédé de mappage LOQ.

5. Appareil pour transmettre des signaux de radiodiffusion, l'appareil comprenant :
un processeur d'entrée (101) configuré pour entrer des flux d'entrée de processus pour délivrer en sortie des trames de bande de base, BB, pour de multiples chemins de couche physique, PLP ;
un codeur extérieur (301) configuré pour un premier codage dans chacune des trames BB pour chacun des multiples PLP ;
un codeur intérieur (303) configuré pour un deuxième codage des premières données codées par un schéma de contrôle de parité à faible densité, LDPC ;
un entrelaceur par bits (d403a, d403b) configuré pour l'entrelacement par bits des deuxièmes données codées ;
un mappeur par modulation d'amplitude en quadrature, QAM, (401a, 401b) configuré pour mapper les données entrelacées par bits ;
un entrelaceur temporel (402a, 402b) configuré pour l'entrelacement temporel des données mappées QAM ;
un constructeur de trames (403) configuré pour la construction de trames de signal comprenant les données entrelacées temporellement ;
un entrelaceur fréquentiel (404a, 404b) configuré pour l'entrelacement fréquentiel de données dans les trames de signal construites ; et
un modulateur (105a, 105b) configuré pour la modulation de données dans la trame de signal par un schéma de multiplexage par répartition en fréquence orthogonale, OFDM,
dans lequel des données dans les trames de signal sont traitées par un schéma à entrées multiples et sorties multiples, MIMO, ou un schéma à entrées multiples et sortie unique, MISO.

6. Appareil selon la revendication 5, dans lequel l'appareil comprend en outre :
un diviseur (C-401) configuré pour diviser les deuxièmes données codées en deux trains binaires.

7. Appareil selon la revendication 6, dans lequel le mappeur QAM (401a, 401b) mappe en outre des données dans le premier train binaire pour des symboles respectifs en utilisant un procédé de mappage par modulation d'amplitude en quadrature d'ordre supérieur, HOQ, et mappe des données dans le deuxième train binaire pour des symboles respectifs en utilisant un procédé de mappage par modulation d'amplitude en quadrature d'ordre inférieur, LOQ.

8. Appareil selon la revendication 6, dans lequel l'appareil comprend en outre :
un démultiplexeur (d-404a, d404b) configuré pour démultiplexer les deuxièmes données codées selon le procédé de mappage HOQ et le procédé de mappage LOQ.

9. Procédé pour recevoir des signaux de radiodiffusion, le procédé comprenant :
la réception des signaux de radiodiffusion et la démodulation des signaux de radiodiffusion reçus par un schéma de multiplexage par répartition en fréquence orthogonale, OFDM ;
le désentrelacement fréquentiel des signaux de radiodiffusion démodulés ;
l'analyse syntaxique de trames de signal comprenant les données désentrelacées en fréquence ;
le désentrelacement temporel de données dans les trames de signal analysées syntaxiquement ;
le démappage par modulation d'amplitude en quadrature, QAM, des données désentrelacées temporellement ;
le désentrelacement par bits des données démappées QAM ;
le premier décodage des données désentrelacées par bits pour un chemin de couche physique, PLP, individuel par un schéma de contrôle de parité à faible densité, LDPC ;
le deuxième décodage des premières données décodées ; et
le traitement de sortie des deuxièmes données décodées, dans lequel des données dans les trames de signal sont traitées par un schéma à entrées multiples et sorties multiples, MIMO, ou un schéma à entrées multiples et sortie unique, MISO.

10. Procédé selon la revendication 9, dans lequel le démappage QAM comprend en outre :
le démappage des données désentrelacées temporellement en utilisant un procédé de mappage par modulation d'amplitude en quadrature d'ordre supérieur, HOQ ; et
le démappage des données désentrelacées temporellement en utilisant un procédé de mappage par modulation d'amplitude en quadrature d'ordre inférieur, LOQ.

11. Appareil pour recevoir des signaux de radiodiffusion, l'appareil comprenant :
un démodulateur par multiplexage par répartition en fréquence orthogonale, OFDM (802a, 802b) configuré pour recevoir les signaux de radiodiffusion et démoduler les signaux de radiodiffusion reçus par un schéma de multiplexage par répartition en fréquence orthogonale, OFDM ;
un désentrelaceur fréquentiel (1201a, 1201b) configuré pour le désentelacement fréquentiel des signaux de radiodiffusion démodulés ;
un analyseur syntaxique (1202) configuré pour l'analyse syntaxique de trames de signal comprenant les données désentrelacées en fréquence ;
un désentrelaceur temporel (1203a, 1203b) configuré pour le désentrelacement temporel des trames de signal analysées syntaxiquement ;
un démappeur par modulation d'amplitude en quadrature, QAM, (1204a, 1204b) configuré pour le démappage des données désentrelacées temporellement ;
un désentrelaceur par bits (b-1204a, b-1204b) configuré pour le désentrelacement par bits des données démappées QAM ;
un décodeur intérieur (b-1206) configuré pour le premier décodage des données désentrelacées par bits pour un chemin de couche physique, PLP, individuel par un schéma de contrôle de parité à faible densité, LDPC ;
un décodeur extérieur (1304) configuré pour le deuxième décodage des premières données décodées ; et
un processeur de sortie (806) configuré pour le traitement de sortie des deuxièmes données décodées, dans lequel des données dans les trames de signal sont traitées par un schéma à entrées multiples et sorties multiples, MIMO, ou un schéma à entrées multiples et sortie unique, MISO.

12. Appareil selon la revendication 11, dans lequel le démappeur QAM (1204a, 1204b) démappe en outre les données désentrelacées temporellement en utilisant un procédé de mappage par modulation d'amplitude en quadrature d'ordre supérieur, HOQ, et démappe les données désentrelacées temporellement en utilisant un procédé de mappage par modulation d'amplitude en quadrature d'ordre inférieur, LOQ.
